# EUROPÄISCHE PATENTSCHRIFT

(11) **EP 2 865 090 B1**
(45) Veröffentlichungstag und Bekanntmachung des Hinweises auf die Patenterteilung: **06.07.2022**
(21) Anmeldenummer: 13723731.9
(22) Anmeldetag: 08.05.2013
(51) Int. Cl.: H02P 6/16, G05B 11/00

(54) **VERFAHREN UND VORRICHTUNG ZUR PLAUSIBILISIERUNG EINER STELLUNG EINES STELLGLIEDS EINES STELLGEBERSYSTEMS MIT EINER ELEKTRONISCH KOMMUTIERTEN ELEKTRISCHEN MASCHINE**
METHOD AND APPARATUS FOR CONDUCTNG A PLAUSIBILITY CHECK ON A POSITION OF AN ACTUATING ELEMENT OF A POSITION ENCODER SYSTEM WITH AN ELECTRONICALLY COMMUTATED ELECTRIC MACHINE
PROCÉDÉ ET DISPOSITIF DE CONTRÔLE DE PLAUSIBILITÉ D'UNE POSITION D'UN ACTIONNEUR D'UN SYSTÈME DE DÉTECTION DE POSITION COMPRENANT UN MOTEUR ÉLECTRIQUE À COMMUTATION ÉLECTRONIQUE

(30) Priorität: 25.06.2012 DE 102012210729
(43) Veröffentlichungstag der Anmeldung: 29.04.2015
(73) Patentinhaber: Robert Bosch GmbH, 70442 Stuttgart (DE)
(72) Erfinder: GROSSMANN, Alex, 71229 Leonberg (DE); SCHWEINFURTH, Reiner, 75031 Eppingen (DE); SIEBER, Udo, 74321 Bietigheim (DE); BUEHRLE, Ralf, 71686 Hochberg (DE)
(86) Internationale Anmeldenummer: PCT/EP2013/059660
(87) Internationale Veröffentlichungsnummer: WO 2014/000934

(56) Entgegenhaltungen:
- JP-A- 2010 220 349
- US-A1- 2004 061 461
- US-A1- 2011 273 127

## Beschreibung

### Technisches Gebiet

Die vorliegende Erfindung betrifft im Allgemeinen Stellgebersysteme, insbesondere Stellgebersysteme, bei denen zwischen dem Stellantrieb und dem Stellglied eine Getriebeübersetzung vorgesehen ist und eine Lageregelung basierend auf einem Stellungsdetektor des Stellglieds durchgeführt wird.

### Stand der Technik

Stellgebersysteme, wie beispielsweise Klappen-Stellgebersysteme, zum Einsatz in einem Motorsystem mit einem Verbrennungsmotor weisen einen Stellungsdetektor auf, um die Stellung des Stellglieds, d. h. der Klappe, zu erfassen und so eine redundante Überprüfung der Stellung des Stellglieds zu ermöglichen. Bei derartigen Stellgebersystemen ist oftmals zwischen einem Stellantrieb und dem Stellglied eine Getriebeübersetzung vorgesehen, durch die eine Verstellung des Stellglieds durch mehrere Umdrehungen des Stellantriebs bewirkt wird. Die Getriebeübersetzung ermöglicht es dadurch, ein hohes Stellmoment bzw. eine hohe Stellkraft auf das Stellglied auszuüben.

Als Stellantrieb können elektronisch kommutierte Motoren vorgesehen sein. Derartige Stellantriebe benötigen für eine optimale Kommutierung eine Angabe über die Rotorlage des Rotors des Motors. Bei Lageregelungen, die die Stellung des Stellglieds regeln und zur Ansteuerung des Motors eine aus der Stellung des Stellglieds rückgerechnete Rotorlage verwenden, ist nachteilig, dass aufgrund der Getriebeübersetzung die Angabe zur Rotorlage nur mit einer für eine optimale Kommutierung des Stellantriebs unzureichenden Genauigkeit bereitgestellt wird.

Es ist Aufgabe der vorliegenden Erfindung, ein Verfahren zur Plausibilisierung oder zum Korrigieren einer Stellungsangabe eines Stellglieds in einem Stellgebersystem zur Verfügung zu stellen, das ohne einen unmittelbar an dem Stellantrieb angeordneten Lagesensor auskommt.

Aus der JP 2010 220349 A ist ein Steuergerät für einen Fahrzeugmotor bekannt.

Aus der US 2011 / 0 273 127 A1 ist ein Ventilsteuergerät bekannt.

Aus der US 2004/ 0 061 461 A1 ist eine Vorrichtung zur Steuerung einer elektrischen Maschine bekannt.

### Offenbarung der Erfindung

Diese Aufgabe wird durch das Verfahren zum Plausibilisieren oder Korrigieren einer gemessenen Stellungsangabe eines Stellglieds eines Stellgebersystems gemäß Anspruch 1 sowie durch die Vorrichtung, das Stellgebersystem, das Computerprogramm und das Computerprogrammprodukt gemäß den nebengeordneten Ansprüchen gelöst.

Weitere vorteilhafte Ausgestaltungen der vorliegenden Erfindung sind in den abhängigen Ansprüchen angegeben.

Gemäß einem ersten Aspekt ist ein Verfahren zum Betreiben eines Stefigebersystems vorgesehen, wobei ein Stellglied über einen Stellantrieb, der einen rotatorischen elektronisch kommutierten Motor umfasst, stellbar ist und wobei eine elektrische Rotorlage eines Rotors des Stellantriebs mehreren Stellungen des Stellglieds zugeordnet werden kann, mit folgenden Schritten:
- Durchführen einer Lageregelung basierend auf einer erfassten Stellungsangabe über eine Stellung des Stellglieds, wobei eine Lagestellgröße generiert wird, der ein Raumzeiger zur Ansteuerung des Stellantriebs zugeordnet wird; und
- Plausibilisieren oder Korrigieren der Stellungsangabe durch den der generierten Lagestellgröße zugeordneten Raumzeiger.

Eine Idee des obigen Verfahrens besteht darin, bei einem lagegeregelten Stellgebersystem den durch die Lageregelung bzw. das Kommutierungsschema vorgegebenen Raumzeiger zur Ansteuerung des elektronisch kommutierten Stellantriebs als Angabe für eine Rotorlage des Stellantriebs zu verwenden und daraus unter Berücksichtigung einer vorgegebenen Getriebeübersetzung mögliche Stellungen des Stellglieds zu bestimmen. Eine Stellungsangabe für die Stellung des Stellglieds, die man von einem mit dem Stellgebersystem gekoppelten Stellungsdetektor erhält, kann nun durch die Stellung des Stellglieds plausibilisiert bzw. korrigiert werden, wobei die Stellungsangabe, die der angesteuerten Rotorlage am ehesten entspricht, als gültige Stellungsangabe ausgewählt wird. Dies wird durch die feste Zuordnung der Rotorlage zu der tatsächlichen Stellung des Stellglieds ermöglicht.

Auf diese Weise ist es möglich, selbst bei einem Stellungsdetektor zur Ermittlung einer Stellungsangabe über die Stellung des Stellglieds mit niedriger Genauigkeit durch die feste Zuordnung einer Rotorlage zu der Stellung des Stellglieds die ermittelte Stellung des Stellglieds zu plausibilisieren oder zu korrigieren.

Weiterhin kann die Stellungsangabe korrigiert werden, indem die zur Lageregelung verwendete Stellungsangabe durch eine Stellungsangabe ersetzt wird, die der dem Raumzeiger zugeordneten Rotorlage am nächsten liegt.

Gemäß einer Ausführungsform kann die Stellungsangabe korrigiert werden, indem die zur Lageregelung verwendete Stellungsangabe mit einer Stellungsangabe beaufschlagt wird, die der dem Raumzeiger zugeordneten Rotorlage am nächsten liegt.

Es kann vorgesehen sein, dass die zur Lageregelung verwendete Stellungsangabe mit einer Stellungsangabe überprüft wird, die der dem Raumzeiger zugeordneten Rotorlage am nächsten liegt.

Weiterhin kann die erfasste Stellungsangabe gemäß einer Korrekturfunktion korrigiert werden, wobei die korrigierte erfasste Stellungsangabe entsprechend einer Stellungsangabe weiter korrigiert wird, die der dem Raumzeiger zugeordneten Rotorlage am nächsten liegt.

Gemäß einem weiteren Aspekt ist eine Vorrichtung zum Betreiben eines Stellgebersystems vorgesehen, wobei ein Stellglied über einen Stellantrieb, der einen rotatorischen elektronisch kommutierten Motor umfasst, stellbar ist und wobei eine elektrische Rotorlage eines Rotors des Stellantriebs mehreren Stellungen des Stellglieds zugeordnet werden kann, wobei die Vorrichtung ausgebildet ist, um:
- eine Lageregelung basierend auf einer erfassten Stellungsangabe über eine Stellung des Stellglieds durchzuführen, wobei eine Lagestellgröße generiert wird, der ein Raumzeiger zur Ansteuerung des Stellantriebs zugeordnet wird; und
- die Stellungsangabe durch den der generierten Lagestellgröße zugeordneten Raumzeiger zu plausibilisieren oder zu korrigieren.

Gemäß einem weiteren Aspekt ist ein Stellgebersystem vorgesehen, umfassend:
- einen Stellantrieb, der einen rotatorischen elektronisch kommutierten Motor umfasst;
- ein Stellglied, das über den Stellantrieb stellbar ist und so mit dem Stellantrieb gekoppelt ist, dass eine elektrische Rotorlage eines Rotors des Stellantriebs mehreren Stellungen des Stellglieds zugeordnet werden kann; und
- die obige Vorrichtung.

Gemäß einem weiteren Aspekt ist ein Computerprogramm mit Programmcodemitteln vorgesehen, um alle Schritte des obigen Verfahrens durchzuführen, wenn das Computerprogramm auf einem Computer oder der obigen Vorrichtung ausgeführt wird.

Gemäß einem weiteren Aspekt ist ein Computerprogrammprodukt vorgesehen, das einen Programmcode enthält, der auf einem computerlesbaren Datenträger gespeichert ist und der, wenn er auf einer Datenverarbeitungseinrichtung ausgeführt wird, das obige Verfahren durchführt.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine schematische Darstellung eines Stellgebersystems mit einem elektronisch kommutierten Stellantrieb, der über ein Getriebe mit einem zu stellenden Stellglied verbunden ist; und
- Figur 2: ein Flussdiagramm zur Veranschaulichung eines Verfahrens zum Plausibilisieren bzw. Korrigieren einer Lageinformation über eine Rotorlage.

### Beschreibung von Ausführungsformen

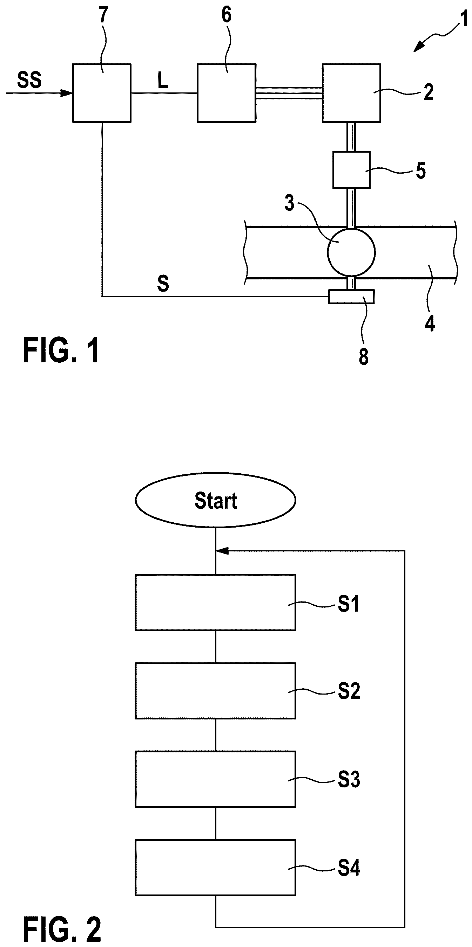

Figur 1 zeigt eine schematische Darstellung eines Stellgebersystems 1, insbesondere eines Drosselklappen-Stellgebers für ein Frischluftansaugsystem eines Motorsystems mit einem Verbrennungsmotor. Das Stellgebersystem 1 umfasst einen Stellantrieb 2, der als ein rotatorischer, elektronisch kommutierter Elektromotor ausgebildet sein kann. Der Stellantrieb 2 dient zum Stellen eines Stellglieds 3, das in dem gezeigten Ausführungsbeispiel als eine Klappe in einem Ansaugrohr 4 ausgebildet ist.

Das Stellglied 3 kann gedreht, geschwenkt bzw. in sonstiger Weise gestellt werden. Im Fall einer Klappe als Stellglied 3 bewirkt ein Verschwenken, dass ein Öffnungsquerschnitt in dem Ansaugrohr 4 variiert wird. Der Stellantrieb 2 ist dazu mit dem Stellglied 3 über ein Getriebe 5 gekoppelt, das eine Getriebeübersetzung aufweist. Im vorliegenden Ausführungsbeispiel ist die Klappe als Stellglied 3 für eine Verschwenkbewegung von 90° vorgesehen. Diese Verschwenkbewegung des Stellglieds 3 wird durch eine Anzahl von Umdrehungen eines Rotors (nicht gezeigt) des Stellantriebs 2 erreicht. Das heißt, eine Umdrehung des Rotors des Stellantriebs 2 entspricht einer Verstellung des Stellglieds 3 um einen bestimmten Winkel, der sich aus der Getriebeübersetzung des Getriebes 5 ergibt.

Der Stellantrieb 2 umfasst einen elektronisch kommutierten Elektromotor, insbesondere eine dreiphasige elektrische Maschine, die von einer Treiberschaltung 6 angesteuert wird. Die Treiberschaltung 6 generiert Phasenspannungen für den Stellantrieb 2, um dem Stellantrieb 2 einen Spannungszeiger (Raumzeiger) vorzugeben, der zumindest im stationären Fall zu einer Ausrichtung des Rotors entsprechend (parallel zu) dem vorgegebenen Raumzeiger führt. Der Spannungszeiger führt zu einer Ausbildung eines dem Raumzeiger parallelen Magnetfelds, zu dem sich das Erregermagnetfeld, das üblicherweise von Rotorpolen erzeugt wird, versucht auszurichten.

Der Spannungszeiger ist durch eine Amplitude (Spannungshöhe) und einer Raumzeigerrichtung definiert. Der durch die Phasenspannungen vorgegebene Raumzeiger wird basierend auf einer Lagestellgröße L von einer Steuereinheit 7 generiert. In der Treiberschaltung 6 kann dazu ein Kommutierungsverfahren implementiert sein, das den Raumzeiger durch Anlegen der Phasenspannungen entsprechend einem Kommutierungsmuster bereitstellt.

Die Steuereinheit 7 ist mit einem Stellungsdetektor 8 verbunden, der nahe dem Stellglied 3 angeordnet ist und eine Stellungsangabe S über die Stellung des Stellglieds 3 bereitstellt. Die Funktion des Stellungsdetektors 8 kann auf optischen, magnetischen oder ähnlichen Messverfahren basieren. In der Regel weist der Stellungsdetektor 8 ein Geberrad auf, das mit dem Stellglied 3 gekoppelt ist, sowie einen Sensor, der eine Bewegung des Geberrads detektiert und ein entsprechendes Lageänderungssignal ausgibt. Das Lageänderungssignal kann dann in dem Stellungsdetektor 8 z.B. durch Kumulierung in die Stellungsangabe S umgesetzt werden.

Basierend auf der Stellungsangabe für die Stellung des Stellglieds 3 führt die Steuereinheit 7 eine Lageregelung aus, die als Stellgröße die an die Treiberschaltung 6 kommunizierte Lagestellgröße L bereitstellt. Die Lageregelung kann entsprechend einer herkömmlichen Lageregelung basierend auf einer extern vorgegebenen Sollstellung SS ausgebildet sein und einen Proportionalanteil und/oder einen Differentialanteil und/oder einen Integralanteil umfassen. Die Lageregelung kann als eine Stellgröße einen Raumzeiger ermitteln, der zu Phasenspannungen umgesetzt wird, um so ein entsprechend gerichtetes Magnetfeld gebildet wird. Der Läufer des Stellantriebs 2 richtet sich entsprechend dem gerichteten Magnetfeld aus.

In einer alternativen Ausgestaltung kann die Lageregelung jedoch auch einen anliegenden Raumzeiger inkrementell in Amplitude und/oder Richtung ändern, ohne dass eine Stellgröße bestimmt wird, die eine absolute Stellung des Raumzeigers vorgibt. In diesem Fall kann eine Stellung aus den von der Treiberschaltung 6 angelegten Phasenspannungen zurückgerechnet werden.

Das Steuergerät 7 kann weiterhin eine Korrekturfunktion enthalten, die die Genauigkeit der für die Lageregelung verwendeten Stellungsangabe S durch geeignete Adaptionsverfahren verbessert. Beispielsweise kann ein Korrekturverfahren mithilfe einer Korrekturgröße durchgeführt werden. Die Korrekturgröße erhält man, indem der Raumzeiger zusätzlich zur Lagestellgröße L variiert wird, mit der der Stellantrieb 2 angesteuert wird. Die Korrekturgröße entspricht einem Integrationswert, der sich aus einer Integration einer Größe ergibt, die von einem Hilfssignal und einer Stellgröße aus einer Lageregelung, die in dem Steuergerät 7 durchgeführt wird, abhängt.

Um die erhaltene Stellungsangabe S zu plausibilisieren bzw. zu korrigieren ist nun ein Verfahren vorgesehen, das nachfolgend in Verbindung mit dem Flussdiagramm der Figur 2 beschrieben wird.

Das Verfahren der Figur 2 sieht vor, dass in Schritt S1 zunächst eine Stellungsangabe S von dem Stellungsdetektor 8 empfangen wird. In einem nachfolgenden Schritt S2 kann diese Stellungsangabe S durch eine geeignete optionale Korrekturfunktion korrigiert werden.

Die korrigierte Stellungsangabe S kann nun in Schritt S3 basierend auf der tatsächlich an die Treiberschaltung 6 übermittelten Lagestellgröße L, die den tatsächlichen Raumzeiger zur Ansteuerung des Stellantriebs 2 bestimmt, nochmals korrigiert oder plausibilisiert werden. Dies wird durchgeführt, indem der Lagestellgröße L, die den Raumzeiger bestimmt und die zu einer elektrischen Rotorlage des Stellantriebs 2 führt, mehrere mögliche Stellungen des Stellglieds 3 zugeordnet werden, die von der Polpaarzahl der elektrischen Maschine des Stellantriebs 2 und der Getriebeübersetzung des Getriebes 5 abhängt.

Beispielsweise können bei dem obigen Stellgebersystem mit einer Verstellmöglichkeit des Stellglieds von etwa 90° und einem Getriebe 5, das eine Verstellung des Stellglieds 3 um 20° einer Umdrehung des Stellantriebs 2 zuordnet, dem durch die Lagestellgröße L vorgegebenen Raumzeiger mögliche Stellungen des Stellglieds 3 von 10° ± 1°, 30° ± 1°, 50° ± 1°, 70° ± 1° und 90° ± 1°zugeordnet werden. Entspricht die ermittelte Stellungsangabe S des Stellglieds 3 29,5° ± 1,5°, so kann durch die zugeordnete Lagestellgröße eine Stellung des Stellglieds 3 von 30° ± 1° angenommen werden, da die Zuordnung der Rotorlage zu der Stellung des Stellglieds 3 durch das starre Getriebe 5 eindeutig vorgenommen werden kann.

Der Schritt S3 umfasst entweder eine Plausibilisierung des durch die Stellungsangabe S bzw. die durch eine Korrekturfunktion korrigierte Stellungsangabe S angegebenen Werts oder die Stellungsangabe S kann der der durch die Lageregelung bereitgestellten Lagestellgröße L entsprechend zugeordneten Stellung des Stellglieds 3 angepasst oder korrigiert werden, die der Stellungsangabe S des Stellungsdetektors 8 am ehesten entspricht.

Die so erhaltene korrigierte bzw. plausibilisierte Stellungsangabe S kann nun als Eingangsgröße für die Lageregelung in Schritt S4 verwendet werden, aus der sich eine erneute Lagestellgröße L zur Ansteuerung des Stellantriebs 2 über die Treiberschaltung 6 ergibt. Dieses Verfahren wird wiederholt durchgeführt, so dass zum einen eine permanente Korrektur der Stellungsangabe S mit unabhängigen Korrekturverfahren und zum anderen eine Plausibilisierung bzw. Korrektur durch den tatsächlich angelegten Raumzeiger bzw. die Lagestellgröße L des vorangehenden Regelungszyklus vorgenommen wird.

## Patentansprüche

1. Verfahren zum Betreiben eines Stellgebersystems (1), wobei ein Stellglied (3) über einen Stellantrieb (2), der einen rotatorischen elektronisch kommutierten Motor umfasst, stellbar ist und wobei eine elektrische Rotorlage eines Rotors des Stellantriebs (2) mehreren Stellungen des Stellglieds (3) zuordenbar ist, wobei eine Stellungsangabe (S) der Stellung des Stellglieds (3) durch einen Stellungsdetektor (8), der nahe dem Stellglied (3) angeordnet ist, bereitgestellt wird, mit folgenden Schritten:
- Empfangen der Stellungsangabe (S) über eine Stellung des Stellglieds (3);
- Durchführen einer Lageregelung basierend auf der erfassten Stellungsangabe (S) über die Stellung des Stellglieds (3), wobei eine Lagestellgröße (L) generiert wird, der ein Raumzeiger zur Ansteuerung des Stellantriebs (3) zugeordnet wird;
- Plausibilisieren oder Korrigieren der Stellungsangabe (S) durch den der generierten Lagestellgröße (L) zugeordneten Raumzeiger.

2. Verfahren nach Anspruch 1,
wobei die Steliungsangabe (S) ausschließlich durch den Stellungsdetektor (8) bereitgestellt wird,
wobei die Lageregelungohne einen unmittelbar an dem Stellantrieb (2) angeordneten Lagesensor auskommt.

3. Verfahren nach einem der Ansprüche 1 oder 2, wobei die Stellungsangabe (S) korrigiert wird, indem die zur Lageregelung verwendete Stellungsangabe (S) durch eine Stellungsangabe ersetzt wird, die der dem Raumzeiger zugeordneten Rotorlage am nächsten liegt.

4. Verfahren nach einem der vorhergehenden Ansprüche, wobei die Stellungsangabe (S) korrigiert wird, indem die zur Lageregelung verwendete Stellungsangabe mit einer Stellungsangabe beaufschlagt wird, die der dem Raumzeiger zugeordneten Rotorlage am nächsten liegt.

5. Verfahren nach einem der vorhergehenden Ansprüche, wobei die zur Lageregelung verwendete Stellungsangabe (S) mit einer Stellungsangabe überprüft wird, die der dem Raumzeiger zugeordneten Rotorlage am nächsten liegt.

6. Verfahren nach einem der Ansprüche 1 bis 5, wobei die erfasste Stellungsangabe gemäß einer Korrekturfunktion korrigiert wird, wobei die korrigierte erfasste Stellungsangabe entsprechend einer Steliungsangabe (S) weiter korrigiert wird, die der dem Raumzeiger zugeordnete Rotorlage am nächsten liegt.

7. Vorrichtung zum Betreiben eines Stellgebersystems (1), wobei ein Stellglied (3) über einen Stellantrieb (2), der einen rotatorischen elektronisch kommutierten Motor umfasst, stellbar ist und wobei eine elektrische Rotorlage eines Rotors des Stellantriebs (2) mehreren Stellungen des Stellglieds (3) zugeordnet werden kann, wobei eine Stellungsangabe (S) der Stellung des Stellglieds (3) durch einen Stellungsdetektor (8), der nahe dem Stellglied (3) angeordnet ist, bereitgestellt wird, wobei die Vorrichtung ausgebildet ist, um:
- die Stellungsangabe (S) über eine Stellung des Stellglieds (3) zu empfangen;
- eine Lageregelung basierend auf der erfassten Stellungsangabe (S) über die Stellung des Stellglieds (3) durchzuführen, wobei eine Lagestellgröße (L) generiert wird, der ein Raumzeiger zur Ansteuerung des Stellantriebs zugeordnet wird;
- die Stellungsangabe (S) durch den der generierten Lagestellgröße (L) zugeordneten Raumzeiger zu plausibilisieren oder zu korrigieren.

8. Stellgebersystem (1) umfassend:
- einen Stellantrieb (2), der einen rotatorischen elektronisch kommutierten Motor umfasst;
- ein Stellglied (3), das über den Stellantrieb (2) stellbar ist und so mit dem Stellantrieb (2) gekoppelt ist, dass eine elektrische Rotorlage eines Rotors des Stellantriebs (2) mehreren Stellungen des Stellglieds (3) zugeordnet werden kann;
- eine Vorrichtung nach Anspruch 7.

9. Computerprogramm mit Programmcodemitteln, um alle Schritte des Verfahrens nach einem der Ansprüche 1 bis 6 durchzuführen, wenn das Computerprogramm auf einem Computer oder einer Vorrichtung gemäß Anspruch 7 ausgeführt wird.

10. Computerprogrammprodukt, das einen Programmcode enthält, der auf einem computerlesbaren Datenträger gespeichert ist und der, wenn er auf einer Datenverarbeitungseinrichtung ausgeführt wird, das Verfahren nach einem der Ansprüche 1 bis 6 durchführt.

## Claims

1. Method for operating a positioner system (1), wherein an actuator (3) can be actuated by means of an actuating drive (2) that comprises a rotating electronically commutated motor and wherein an electric rotor position of a rotor of the actuating drive (2) can be allocated to multiple positions of the actuator (3), wherein a position indication (S) regarding the position of the actuator (3) is provided by a position detector (8) that is arranged close to the actuator (3), said method comprising the following steps:
- receiving the position indication (S) regarding a position of the actuator (3);
- performing a position control based on the detected position indication (S) regarding the position of the actuator (3), wherein a positioning manipulated variable (L) is generated, a space vector being allocated to said positioning manipulated variable for the purpose of controlling the actuating drive (3);
- performing a plausibility check on, or correcting, the position indication (S) by means of the space vector that is allocated to the positioning manipulated variable (L) that is generated.

2. Method according to Claim 1,
wherein the position indication (S) is provided solely by the position detector (8),
wherein the position control is performed without a position sensor that is arranged directly on the actuating drive (2).

3. Method according to either of Claims 1 and 2, wherein the position indication (S) is corrected by way of the position indication (S) that is used for the position control being replaced by a position indication that lies closest to the rotor position that is allocated to the space vector.

4. Method according to one of the preceding claims, wherein the position indication (S) is corrected by way of a position indication that lies closest to the rotor position that is allocated to the space vector being added to the position indication that is used for the position control.

5. Method according to one of the preceding claims, wherein the position indication (S) that is used for the position control is checked using a position indication that lies closest to the rotor position that is allocated to the space vector.

6. Method according to one of Claims 1 to 5, wherein the detected position indication is corrected according to a correcting function, wherein the corrected detected position indication is further corrected in accordance with a position indication (S) that lies closest to the rotor position that is allocated to the space vector.

7. Apparatus for operating a positioner system (1), wherein an actuator (3) can be actuated by means of an actuating drive (2) that comprises a rotating electronically commutated motor and wherein an electric rotor position of a rotor of the actuating drive (2) can be allocated to multiple positions of the actuator (3), wherein a position indication (S) regarding the position of the actuator (3) is provided by a position detector (8) that is arranged close to the actuator (3), wherein the apparatus is designed:
- to receive the position indication (S) regarding a position of the actuator (3);
- to perform a position control based on the detected position indication (S) regarding the position of the actuator (3), wherein a positioning manipulated variable (L) is generated, a space vector being allocated to said positioning manipulated variable for the purpose of controlling the actuating drive;
- to perform a plausibility check on, or to correct, the position indication (S) by means of the space vector that is allocated to the positioning manipulated variable (L) that is generated.

8. Positioner system (1) comprising:
- an actuating drive (2) that comprises a rotating electronically commutated motor;
- an actuator (3) that can be actuated by means of the actuating drive (2) and is coupled to the actuating drive (2) in such a manner that an electric rotor position of a rotor of the actuating drive (2) can be allocated to multiple positions of the actuator (3);
- an apparatus according to Claim 7.

9. Computer program having program code means in order to carry out all the steps of the method according to one of Claims 1 to 6 when the computer program is executed on a computer or an apparatus according to Claim 7.

10. Computer program product which contains a program code that is stored on a computer-readable data storage medium and carries out the method according to one of Claims 1 to 6 when it is executed on a data processing device.

## Revendications

1. Procédé permettant de faire fonctionner un système de transmetteur de réglage (1), dans lequel un actionneur (3) peut être réglé par l'intermédiaire d'un servomoteur (2) qui comprend un moteur rotatif à commutation électronique, et dans lequel une position de rotor électrique d'un rotor du servomoteur (2) peut être associée à plusieurs réglages de l'actionneur (3), une indication de réglage (S) du réglage de l'actionneur (3) étant fournie par un détecteur de réglage (8) qui est disposé à proximité de l'actionneur (3), comprenant les étapes suivantes consistant à :
- recevoir l'indication de réglage (S) concernant un réglage de l'actionneur (3) ;
- exécuter une régulation de position sur la base de l'indication de réglage (S) acquise concernant le réglage de l'actionneur (3), une grandeur de réglage de position (L) étant générée à laquelle est associé un vecteur spatial pour le pilotage du servomoteur (3) ;
- plausibiliser ou corriger l'indication de réglage (S) par le vecteur spatial associé à la grandeur de réglage de position (L) générée.

2. Procédé selon la revendication 1, dans lequel l'indication de réglage (S) est fournie exclusivement par le détecteur de réglage (8), la régulation de position se passant d'un capteur de position disposé directement sur le servomoteur (2).

3. Procédé selon l'une quelconque des revendications 1 ou 2, dans lequel l'indication de réglage (S) est corrigée en ce que l'indication de réglage (S) utilisée pour la régulation de position est remplacée par une indication de réglage qui est la plus proche de la position de rotor associée au vecteur spatial.

4. Procédé selon l'une quelconque des revendications précédentes, dans lequel l'indication de réglage (S) est corrigée en ce que l'indication de réglage utilisée pour la régulation de position est soumise à une indication de réglage qui est la plus proche de la position de rotor associée au vecteur spatial.

5. Procédé selon l'une quelconque des revendications précédentes, dans lequel l'indication de réglage (S) utilisée pour la régulation de position est vérifiée par une indication de réglage qui est la plus proche de la position de rotor associée au vecteur spatial.

6. Procédé selon l'une quelconque des revendications 1 à 5, dans lequel l'indication de réglage acquise est corrigée selon une fonction de correction, l'indication de réglage acquise corrigée est en outre corrigée selon une indication de réglage (S) qui est la plus proche de la position de rotor associée au vecteur spatial.

7. Dispositif permettant de faire fonctionner un système de transmetteur de réglage (1), dans lequel un actionneur (3) est réglable par l'intermédiaire d'un servomoteur (2) qui comprend un moteur rotatif à commutation électronique, et une position de rotor électrique d'un rotor du servomoteur (2) pouvant être associée à plusieurs réglages de l'actionneur (3), une indication de réglage (S) du réglage de l'actionneur (3) étant fournie par un détecteur de réglage (8) qui est disposé à proximité de l'actionneur (3), le dispositif étant réalisé pour :
- recevoir l'indication de réglage (S) concernant un réglage de l'actionneur (3) ;
- exécuter une régulation de position sur la base de l'indication de réglage (S) acquise concernant le réglage de l'actionneur (3), une grandeur de réglage de position (L) étant générée à laquelle est associé un vecteur spatial pour le pilotage du servomoteur ;
- plausibiliser ou corriger l'indication de réglage (S) par le vecteur spatial associé à la grandeur de réglage de position (L) générée.

8. Système de transmetteur de réglage (1), comprenant :
- un servomoteur (2) qui comprend un moteur rotatif à commutation électronique ;
- un actionneur (3) qui est réglable par l'intermédiaire du servomoteur (2) et est couplé au servomoteur (2) de telle sorte qu'une position de rotor électrique d'un rotor du servomoteur (2) peut être associée à plusieurs réglages de l'actionneur (3) ;
- un dispositif selon la revendication 7.

9. Programme informatique comprenant des moyens de code programme pour exécuter toutes les étapes du procédé selon l'une quelconque des revendications 1 à 6 lorsque le programme informatique est exécuté sur un ordinateur ou un dispositif selon la revendication 7.

10. Produit de programme informatique qui contient du code programme qui est stocké sur un support de stockage lisible par ordinateur, et qui, lorsqu'il est exécuté sur un équipement de traitement de données, exécute le procédé selon l'une quelconque des revendications 1 à 6.
